# EUROPEAN PATENT SPECIFICATION

(11) **EP 1 775 224 B1**
(45) Date of publication and mention of the grant of the patent: **11.05.2011**
(21) Application number: 07002728.9
(22) Date of filing: 29.03.2004
(51) Int. Cl.: B65C 9/40

(54) **Labelling station**
Etikettierstation
Poste d'étiquetage

(30) Priority: 28.03.2003 GB 0307225
(43) Date of publication of application: 18.04.2007
(62) Divisional of application: 04724059.3
(73) Proprietor: Arx Limited, St. Albans, Herts AL1 5LU (GB)
(72) Inventor: Katritzky, Rupert, London NW2 3SR (GB); Simcox, Tom, St. Albans Herts AL2 1GE (GB); Hasenfratz, Luc, Hemel Hempstead CW7 8EW (GB); Bevan, David, Winsford Cheshire CW7 3UH (GB)
(74) Representative: Samuels, Adrian James

(56) References cited:
- DE-A1- 19 750 204
- DE-A1- 19 832 548
- US-A1- 5 232 539

## Description

This invention relates to a labelling station for use in automated dispensing systems particularly those suitable for dispensing pharmaceutical preparations.

Automated pharmacies provide a fast, accurate and efficient way of storing and dispensing pharmaceutical preparations in settings such as hospitals which may be required to process many hundreds of prescription orders a day and hold a stock of thousands of different drugs in packaging having a wide variety of shapes and sizes.

Automatic pharmacy systems such as those supplied by the Applicant can be loaded with any normal size of pharmaceutical pack. The details of the pack's contents are automatically entered into the system by scanning a bar code on the pack. A look-up table of pre-stored sizes is then used to establish the dimensions of the pack using the information from its bar code. Pack input modules which measure the pack being entered are also known.

Once the size of the pack is established, the system calculates an optimum physical location for it on the shelves - i.e. a location which most precisely matches the dimensions of the pack. The location is then stored in a database together with the information on the pack contents and the date of storage.

When a particular drug is required, a request is made to the system which then determines the location of the pack with the earliest storage date matching the requirement. A robotic arm physically retrieves the pack and places it on a delivery chute. Independently, details about the drug and the patient for whom it is intended are sent to a printer to print a label. An operator then takes the pack from the chute and applies the label from the printer.

The Applicants have appreciated that whilst automated pharmacies dramatically improve speed and efficiency over a manual system and give a low error rate (e.g. typically 1 in 3,00,000), the human, involvement in placing the labels on the packs inevitably leads to occasional mistakes which can increase the overall error rate to the order of 1 in 5,000. Most commonly, human error occurs as a result of several packs being delivered over a short space of time and therefore several labels being printed and an accidental transposition of the labels and packs.

An automated pharmacy system is described herein in which patient specific labels may be applied to packs before they are delivered to an output such as a discharge chute. This eliminates the need for human intervention in taking a label from a printer and applying to the correct pack. Not only does this decrease the operator effort required and thus potentially the number of operators required for a pharmacy of given size, but it also eliminates a significant source of potential error in an automated pharmacy system.

The production of a label with patient-specific information and its application to the correct pack are made possible since the means for selecting and retrieving the pack; and the labelling station may be connected to a common control system to coordinate them. In other words the labelling station "knows" what pack it is applying a label to.

It will be appreciated that for a system to be of maximum practical benefit, it must be able to handle a variety of different pack sizes. This could be achieved in a number of ways. For example, a label of minimal size may be used which will be small enough to be applied to all or a majority of packs. Packs for which such a label was not completely suitable could be left for an operator to label or could be partially labelled, leaving the operator to complete the application of the label, trim the label etc. A machine for applying labels having the features of the preamble to claim 1 is disclosed in US 5,232,539.

However, the Applicants have devised a novel feature to address the issue outlined above. When viewed from a first aspect the invention provides a labelling station as claimed in claim 1. The means for applying the label is adapted to alter the way in which the label is applied depending upon the dimensions of the pack. It will be appreciated that this is enabled by the overall structure of the system disclosed herein which allows the labelling station to know which pack is being labelled and thus in at least preferred embodiments, the dimensions of that pack.

The labelling station applies the label in an orientation relative to the pack which is dependent upon at least one dimension of the pack. Thus, for example and in the preferred embodiment, a label of common size is applied to all packs. For larger packs the label is simply applied flat onto the upper surface of the pack, but for smaller packs it is applied across the pack and folded over at the edges. It is therefore preferred that the label applicator is adapted to apply labels onto a pack in at least two discrete planes - e.g. both horizontally and vertically.

The selected orientation could be achieved by the means for delivering the pack to the labelling station doing so in the appropriate orientation, but preferably the labelling station is arranged to orient the pack and label applicator appropriately. This is particularly advantageous as it minimises the modification required compared to the design of existing automated pharmacy systems to implement the present invention. This has benefits both for newly commissioned systems and the upgrading of existing systems. The platform on which the pack to be labelled sits may be rotatable, but most preferably the label applicator is arranged to adjust its orientation.

It is preferred in accordance with the invention that the label applicator is configured to be able to apply said label onto said pack in at least two discrete planes - e.g. both horizontally and vertically.

As has been discussed hereinabove, the labelling station in accordance with the invention can be given information regarding the pack to which a label is to be applied, in particular its dimensions, and in some aspects/embodiments of the invention this may be used by the labelling station to determine how the label is to be applied - e.g. its orientation. Preferably however the processing of the dimensions is carried out remotely and the labelling station is adapted to receive an instruction as to how the label is to be applied. This allows for easy reconfiguration and allows the labelling station to be relatively "dumb".

Furthermore, it is also preferred that the label applicator is arranged to apply the label at a predetermined position on the pack, the position being variable from one pack type to another. For example it may be desirable to place a label at differing positions on two packs to avoid obscuring important information which may be printed at different places on each pack. It also enables a manufacturer to specify where a label should be placed on its pack - e.g. so that its trade mark remains prominent.

It will be appreciated that the considerations above are not necessarily size or shape dependent, but rather are dependent on the external pack design. Thus even for two packs which have exactly the same dimensions and contain exactly the same drug, their external design may be different - e.g. they may be made by different manufacturers - and thus it is desirable to be able to place a label thereon at different locations.

In preferred embodiments therefore, the system is arranged to pass information to the labelling station to enable the label applicator to apply the label in the predetermined position. The information could be passed indirectly - e.g. as a manufacturer's code, pack type etc. which the labelling station uses to find the label position from a look up table. Preferably, however, label positioning information is passed directly to the labelling station or label applicator, e.g. in the form of a labelling instruction.

The ability to determine the position of the label on the pack also enables multiple labels to be applied to a single pack which are offset from one another so that both or all are visible. Advantage could be taken of this, for example, by using a smaller size of standard label and simply using two if a large amount of matter is required to be printed on a particular pack.

It may be seen that for each pack, a labelling station may be passed instructions which include both the patient-specific information to be printed on the label and instructions as to how the label should be applied. Preferably, the latter comprises a code for determining an orientation in which the label is to be applied.

A preferred embodiment of the invention will now be described, by way of example only, with reference to the accompanying drawings in which:
Figure 1 is a schematic representation of an automated pharmacy described for reference only;
Figure 2 is a system diagram showing the interactions of the various subsystems;
Figure 3 is a partly schematic representation of a labelling station in accordance with the invention;
Figure 4 is a side view of a label applicator;
Figure 5 is a series of end views showing a label being applied to a relatively small pack;
Figure 6 is a series of side views showing a label being applied to a relatively large pack;
Figure 7a is a series of plan views of a pack with a label applied in various positions; and
Figure 7b is a series of views similar to Figure 7a but with the label applied in a different orientation.

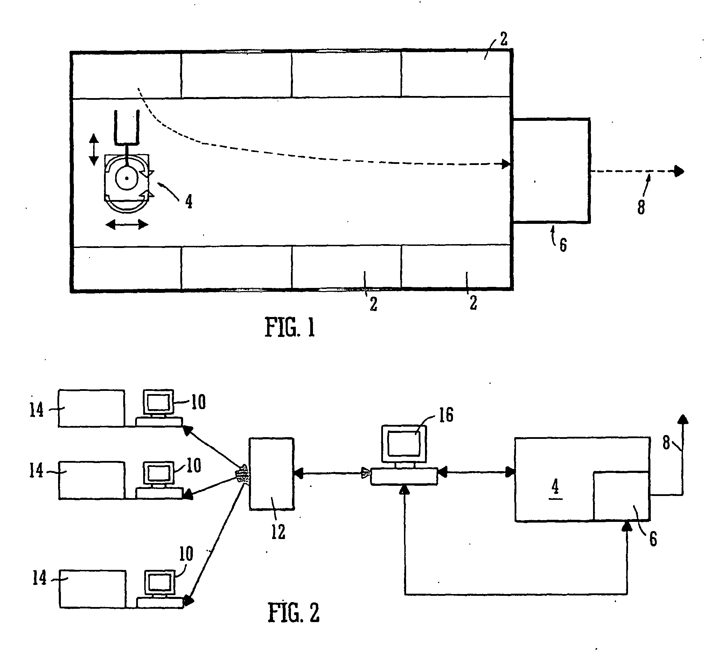

Turning firstly to Figure 1, part of an automated pharmacy is shown. A storage area comprising a number of shelves 2 houses a stock of pharmaceutical packs (not shown). The packs are not stored in any predetermined arrangement, but rather they are stored in the smallest available space into which they will fit, when they are loaded into the pharmacy. A robot arm 4 is used to take packs and place them onto the shelves 2 when they are entered into the pharmacy and subsequently to retrieve them for dispensing. The robot arm 4 is controlled by a computer which holds an inventory database recording the location of each pack as well as its size and information identifying its contents. This allows the arm 4 to calculate and place each newly entered pack in the optimum location.

At one end of the shelves 2 is a labelling station 6 which will be described in greater detail hereinafter. Downstream of the labelling station 6 is a dispensing chute 8 from the end of which a pharmacy assistant may obtain the dispensed pack.

The overall operation of the system will now be described with reference to Figure 2, which shows the various data subsystems of the pharmacy. The user interface to the system is provided by one or more personal computers (PCS) 10 which are linked to a server 12. Each PC 10 has, in addition to the standard peripherals a backup label printer 14.

The pharmacy server 12 is in data communication with a further PC interface 16 which in turn is in communication with the drug-picking robot 4 and the labelling station 6.

In operation a user will enter a drug order into one of the client PCS 10, which will then be sent to the pharmacy server 12. The pharmacy server 12 may include a database for all patients and therefore permit verification of the name on the drug order against the database. It may also record the order. The user may create the drug order from scratch by entering all the required information such as the patient's name, the required drug, the required quantity etc., e.g. from a written prescription. Alternatively the user may be able to enter a reference to an order created elsewhere on a linked system.

The pharmacy server composes a message which it transmits to the PC interface 16. The order message includes the required drug form and amount, the patient's name, whether an inpatient or outpatient, the dose and any other information required for the label. The PC interface 16 translates the received order message and extracts from it the information required by the robot 4 to retrieve an appropriate pack from the shelves. This information would normally comprise the drug form and amount.

The robot 4 transmits a confirmatory reply to the PC interface 16 and begins to process the order by selecting from its database the longest-stored pack meeting the specified criteria to ensure strict stock rotation. In a possible alternative arrangement the robot 4 may transmit the confirmatory reply at this stage, i.e. once it has been verified that the required drug is in stock, generating an error message otherwise. The selected record for the longest-stored suitable pack will include its location on the shelves and this is therefore used to direct the robot arm to the correct location to enable the pack to be retrieved and carried to the labelling station 6 where it is delivered.

At the same time, once the PC interface 16 has received the confirmatory reply from the robot 4, it prepares a label printing instruction. The printing instruction is prepared first by selecting a suitable template from a pre-prepared library. The template is selected on the basis of certain fields from the order message received from the pharmacy server 12, for example, whether the drug is for an in-patient or an out-patient, the form of drug (e.g. tablets, liquid etc). The printing instruction is completed with patient-specific information to appear on the label such as the patient's name; the name of the drug (to enable verification that the correct label has been applied); the dose and length of course where appropriate; and any additional information required.

The printing instruction may include instructions for printing a bar code on the label. The bar code may encode some or all of the textual information printed on the label and/or may include additional information. Indeed it is even envisaged in some circumstances that only a bar code could be printed.

Although a library of pre-prepared label templates is available, the PC interface also has the facility for the customisation of the templates or the creation of new ones. For example this would allow a hospital to add its own logo to all drugs dispensed.

The printing instruction is then sent to the labelling station where it is passed to the label printer and the label is printed.

Once the drug-picking robot 4 has delivered the selected pack to the labelling station 6, it sends a message to the PC interface 16. Not only does this message notify the PC interface that the pack is ready to be labelled, but it includes the dimensions of the pack - i.e. the length, depth and width. The robot arm 4 retrieves this information from its database along with the pack's location before it picks it from the shelf. This means that the IT system 12 does not need to know the size of the packet or even necessarily which manufacturer it is from - this is handled by the robot arm 4 and PC interface 16.

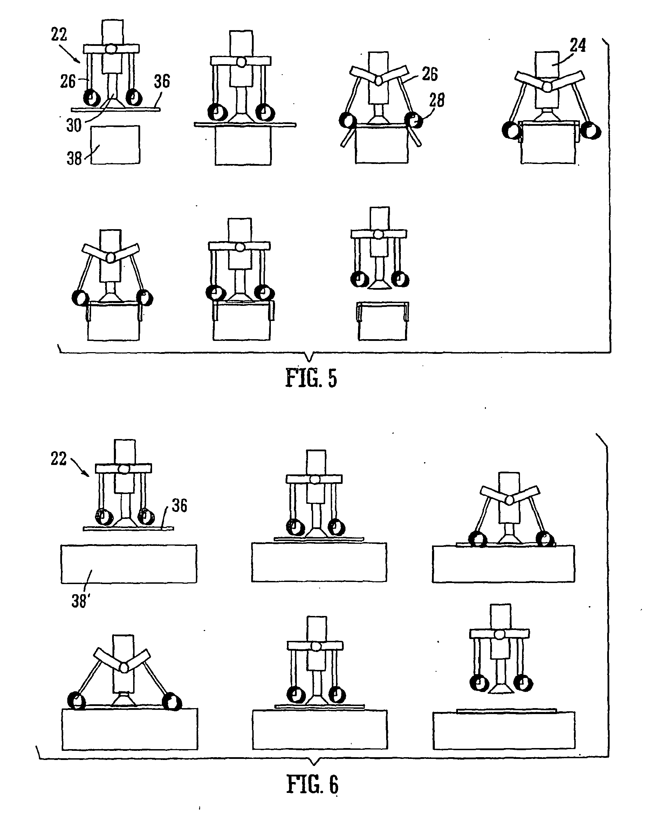

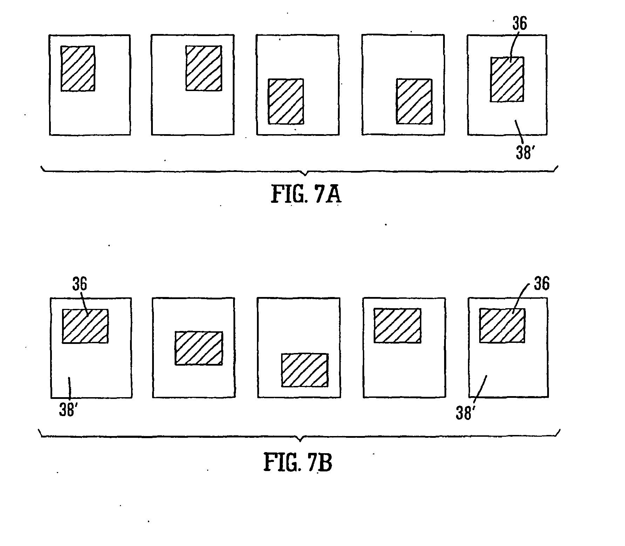

The PC interface 16 uses the dimensions of the pack to determine how the label should be applied to it. Firstly, for example, the PC interface 16 determines whether the pack has at least its length and width both greater than 40 mm. If it does not it will instruct the labelling station to rotate the pack by 90° before applying the label. This will mean that the label will be applied across, rather than along the pack and will be folded down along the adjacent sides as will be described below with reference to Figure 5. The dimensions may also be used to determine where on the pack the label is applied as will be described below with reference to Figures 7a and 7b.

The PC interface then sends the application instructions to the label applicator at the labelling station 6. It will be appreciated that this ensures coordination between delivery of a pack to the labelling station and application of the correct individual label thereto.

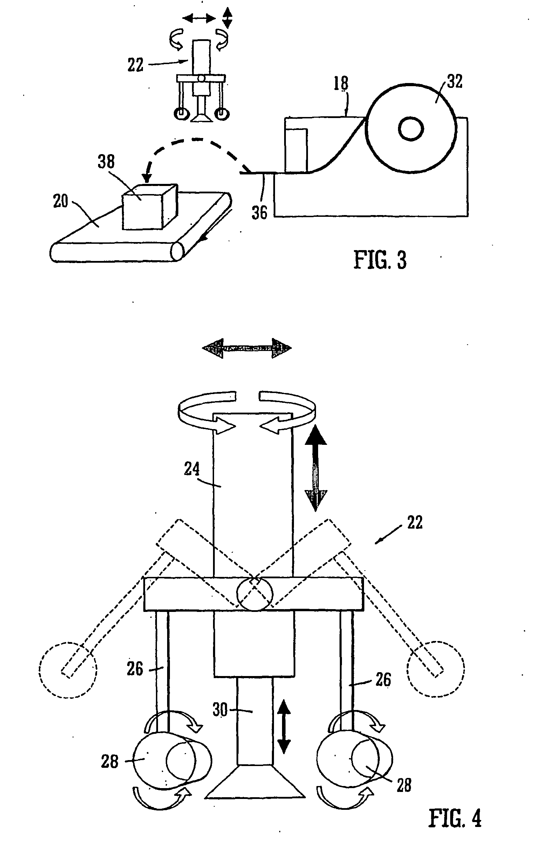

The labelling station 6 is shown in more detail in Figure 3. It comprises generally a label printer 18, a conveyor belt 20 and a label applicator 22 which is shown in more detail in Figure 4.

With reference to Figure 4, the applicator 22 comprises a main shaft 24; a pair of lateral roller arms 26 with rollers 28 at the respective distal ends thereof; and a label picking head 30. The main shaft 24 may be translated in the lateral and vertical directions. It is also mounted so as to be rotatable about its axis through 90° and back.

The roller arms 26 are mutually hingedly mounted to the main shaft 24 as to be able to swing out as shown by the dashed lines in Figure 4. The rollers 28 are mounted to the arms 26 so as to be able to rotate freely. The picking head 30 is able to slide vertically into and out of the main shaft 24. It is connected to a vacuum source to allow it to pick up and subsequently release a label through the selective application of vacuum pressure.

In operation the label printer 18 first prints a label by passing a blank label from a reel 32 under an ink jet print head 34, although any known type of label printer may be used. The printed label 36 is then presented at the edge of the printer. Next, as described earlier, the pharmaceutical pack 38 is delivered by the robot arm (not shown) onto the conveyor belt 20.

Under instruction from the labelling instruction from the PC interface, the conveyor belt 20 moves the pack 38 to the required position under the label applicator 22 to ensure that the label is applied at the desired point along the pack. The labelling instruction from the PC interface also causes the labelling applicator 22 to pick up the printed label 36 and transfer it to above the pack 38 at the desired point across the pack and, if necessary, the whole label applicator head rotates through 90°.

The applicator 22 then applies the label 36 to the pack 38 as may be seen in Figures 5 and 6. Figure 5 shows the applicator after it has turned through 90° and the view in Figure 5 is thus perpendicular to the conveyor belt (the latter being omitted for clarity) and so the pack 38 is seen end-on. As may be seen, the applicator 22 and label 36 move downwardly until the self-adhesive underside of the label 36 is pressed against the top face of the pack to cause it to stick.

The applicator's main shaft 24 and arms 26 then continue to move downwardly whilst the picking head 30 telescopes into the main shaft 24. Since the message from the PC interface 16 to the label applicator 22 contains the dimensions of the pack, it is not necessary for the applicator 22 to rely on resistance from the pack to telescope the picking head 30 into the main shaft 24; the height of the pack is known and so the telescoping may be initiated automatically at the appropriate position.

As will be seen from the fourth and fifth images of Fig. 5, as the main shaft 24 continues to move downwardly, the arms 26 are pushed outwardly causing the rollers 28 to roll to and then over the edges of the pack 38. This presses the label 36 right across the width of the top face and against the sides of the pack so that the label ends up stuck over the top of the pack. This allows a standard sized label to be applied to the smaller pack shown in Figure 5. The last three views in Figure 5 show the retraction of the label applicator 22. The vacuum is released between the penultimate and last views to allow the head 30 to be withdrawn completely.

Figure 6 shows the application of a label 36 to a larger pack 38' which has both dimensions of the top face greater than 40 mm. It will be seen that operation of the applicator 22 is the same except that it is not rotated through 90° before being employed as was the case in the previous example. In this example the greater length of the pack 38' as compared to the width of the pack 38 in Figure 5 means that the rollers 28 simply roll across the top face of the pack 38 to apply the label 36 to that face.

In the case of the larger pack 38' the position of the label 36 on the front face of the pack may be determined. Figure 7a shows various possibilities which may be achieved by judicious positioning of the applicator 22 for lateral positioning and the conveyor belt 20 for longitudinal positioning. Figure 7b shows a further series of possibilities achievable by rotating the applicator through 90° before applying the label 36. Thus it will be appreciated that in some circumstances the applicator may be rotated through 90° even when a larger pack is being labelled.

Returning to Fig. 4, once the pack 38 has been labelled, the conveyor 20 is re-energised to eject the pack 38 from the end thereof and into a chute 8 (see Fig. 1). A user can then collect the labelled pack from the end of the chute.

If an error is encountered during the above procedure or too many requests are received at once, the pack 38 will pass through the labelling station 6 without being labelled. Alternatively the pack could be placed by the robot arm 4 onto the delivery chute 8 and thus bypass the labelling station 6. In either case the appropriate label printing instruction will be diverted to one of the external label printers 14. In other words the known method of operation may be replicated. However, it will be appreciated that this will occur reasonably rarely and thus the likelihood of an error remains very low.

Thus what is described above is a completely automated pharmacy in which no human intervention in labelling is required and thus in which extremely low error rates may be achieved. For example experiments indicate that an error rate of the order of one in twelve thousand is possible in accordance with the invention as compared to one in five thousand as is typical in known systems.

Many variations and modification are possible. For example, only one robot arm and labelling station has been described although a plurality of either may be provided as required - each under control of the PC interface. Indeed with more than one robot arm for example, the advantage of the ability of the PC interface to coordinate the retrieval of drugs with application of the correct, patient-specific label their is realised to an even greater extent.

## Claims

1. A labelling station (6) for applying a label (36) to any of a plurality of different packs (38) comprising means for determining at least one dimension of a pack to be labelled; **characterised by** comprising means for applying a label to a pack in an orientation relative to the pack dependent upon said determined dimension.

2. A labelling station (6) as claimed in claim 1. comprising a label applicator (22) configured to be able to apply said label (36) onto said pack (38) in at least two discrete planes.

3. A labelling station (6) as claimed in claim 2, wherein said label applicator (22) is arranged to adjust its orientation.

4. A labelling station (6) as claimed in claim 1, 2 or 3, wherein the label applicator (22) is arranged to apply the label (36) at a predetermined position on the pack (38), the position being variable from one pack type to another.

5. A labelling station (6) as claimed in any preceding claim, wherein the determination means is arranged to receive information regarding the pack's dimension.

6. A labelling station (6) as claimed in any preceding claim arranged to apply a label (36) of common size to all packs.

7. A labelling station (6) as claimed in any preceding claim wherein the labelling station is adapted to receive an instruction as to how the label (36) is to be applied.

8. A labelling station (6) as claimed in any preceding claim, further comprising a label printer (18).

9. A labelling station (6) as claimed in any preceding claim, wherein said means for applying a label (36) to a pack (38) is in data communication with a control means such that the control means is able to coordinate retrieval of a pack and application of a specific label thereto.

## Patentansprüche

1. Etikettierstation (6) zum Aufbringen eines Etiketts (36) auf eine von mehreren verschiedenen Packungen bzw. Verpackungen (38), die Mittel zum Bestimmen wenigstens einer Abmessung einer zu etikettierenden Verpackung enthält; **gekennzeichnet durch** Mittel, um ein Etikett auf eine Verpackung in einer Orientierung relativ zu der Verpackung, die von der bestimmten Abmessung abhängt, aufzubringen.

2. Etikettierstation (6) nach Anspruch 1, mit einer Etikett-Aufbringungseinrichtung (22), die konfiguriert ist, um das Etikett (36) auf die Verpackung (38) in wenigstens zwei diskreten Ebenen aufbringen zu können.

3. Etikettierstation (6) nach Anspruch 2, wobei die Etikett-Aufbringungseinrichtung (22) dazu ausgelegt ist, ihre Orientierung einzustellen.

4. Etikettierstation (6) nach Anspruch 1, 2 oder 3, wobei die Etikett-Aufbringungseinrichtung (22) dazu ausgelegt ist, das Etikett (36) an einer vorgegebenen Position auf der Verpackung (38) aufzubringen, wobei die Position von einem Verpackungstyp zum nächsten veränderlich ist.

5. Etikettierstation (6) nach einem vorhergehenden Anspruch, wobei die Bestimmungsmittel dazu ausgelegt sind, Informationen bezüglich der Abmessung der Verpackung zu empfangen.

6. Etikettierstation (6) nach einem vorhergehenden Anspruch, die dazu ausgelegt ist, ein Etikett (36) mit gleicher Größe auf alle Verpackungen aufzubringen.

7. Etikettierstation (6) nach einem vorhergehenden Anspruch, wobei die Etikettierstation dazu ausgelegt ist, einen Befehl bezüglich der Art, wie das Etikett (36) aufzubringen ist, zu empfangen.

8. Etikettierstation (6) nach einem vorhergehenden Anspruch, die ferner einen Etikettdrucker (18) enthält.

9. Etikettierstation (6) nach einem vorhergehenden Anspruch, wobei die Einrichtung zum Aufbringen eines Etiketts (36) auf eine Verpackung (38) mit einer Steuereinrichtung in einer Datenkommunikation steht, so dass die Steuereinrichtung den Zugriff auf eine Verpackung und die Aufbringung eines bestimmten Etiketts darauf koordinieren kann.

## Revendications

1. Station d'étiquetage (6) pour appliquer une étiquette (36) à un emballage quelconque parmi une pluralité de différents emballages (38) comportant des moyens pour déterminer au moins une dimension d'un emballage à étiqueter ; **caractérisée en ce qu'**elle comporte des moyens pour appliquer une étiquette à un emballage selon une orientation par rapport à l'emballage qui dépend de ladite dimension déterminée.

2. Station d'étiquetage (6) selon la revendication 1, comportant un applicateur d'étiquette (22) configuré afin de pouvoir appliquer ladite étiquette (36) sur ledit emballage (38) dans au moins deux plans discrets.

3. Station d'étiquetage (6) selon la revendication 2, dans laquelle ledit applicateur d'étiquette (22) est conçu pour ajuster son orientation.

4. Station d'étiquetage (6) selon la revendication 1, 2 ou 3, dans laquelle l'applicateur d'étiquette (22) est conçu pour appliquer l'étiquette (36) à une position prédéterminée sur l'emballage (38), la position étant variable d'un type d'emballage à un autre.

5. Station d'étiquetage (6) selon l'une quelconque des revendications précédentes, dans laquelle les moyens de détermination sont conçus pour recevoir des informations concernant la dimension de l'emballage.

6. Station d'étiquetage (6) selon l'une quelconque des revendications précédentes conçue pour appliquer une étiquette (36) de taille commune à tous les emballages.

7. Station d'étiquetage (6) selon l'une quelconque des revendications précédentes, dans laquelle la station d'étiquetage est adaptée pour recevoir une instruction sur la manière selon laquelle l'étiquette (36) doit être appliquée.

8. Station d'étiquetage (6) selon l'une quelconque des revendications précédentes, comportant en outre une imprimante d'étiquette (18).

9. Station d'étiquetage (6) selon l'une quelconque des revendications précédentes, dans laquelle lesdits moyens destinés à appliquer une étiquette (36) à un emballage (38) sont en communication de données avec des moyens de commande de sorte que les moyens de commande peuvent coordonner la récupération d'un emballage et l'application d'une étiquette spécifique à celui-ci.
